(19) Europäisches Patentamt
European Patent Office
Office européen des brevets

(11) **EP 1 860 868 A1**

(12) **EUROPEAN PATENT APPLICATION**
published in accordance with Art. 158(3) EPC

(43) Date of publication:
**28.11.2007 Bulletin 2007/48**

(51) Int Cl.:
**H04N 5/225** (2006.01)    **G02B 5/22** (2006.01)
**H04M 1/00** (2006.01)    **H04M 1/21** (2006.01)

(21) Application number: **06728663.3**

(22) Date of filing: **06.03.2006**

(86) International application number:
**PCT/JP2006/304244**

(87) International publication number:
**WO 2006/095672 (14.09.2006 Gazette 2006/37)**

(84) Designated Contracting States:
**DE FR GB**

(30) Priority: **11.03.2005 JP 2005068363**

(71) Applicant: **MATSUSHITA ELECTRIC INDUSTRIAL CO., LTD.**
**Osaka 571-8501 (JP)**

(72) Inventor: **MARUYAMA, Tsukuru**
**c/o Matsushita El. Ind. Co., Ltd.**
**Chuo-ku, Osaka-shi, Osaka 540-6319 (JP)**

(74) Representative: **Pautex Schneider, Nicole Véronique et al**
**Novagraaf International SA**
**25, Avenue du Pailly**
**1220 Les Avanchets - Geneva (CH)**

(54) **IMAGE PICKUP DEVICE AND PORTABLE TERMINAL DEVICE**

(57) An image pickup device (1) has an image pickup optical system (2) comprising an optical filter (6) for limiting transmission of light having a predetermined wavelength, and an image pickup element (3) for performing image pickup by receiving image pickup light from the image pickup optical system (2). The optical filter is curved such that light incident on a light incident region of the optical filter (6) has a smaller angle of incidence than that in the case where the optical filter is flat.

FIG. 1

EP 1 860 868 A1

## Description

Technical Field

The present invention relates to an image pickup device such as a camera module and a portable terminal device using the image pickup device.

Background Art

Conventional optical filters used for image pickup devices are disclosed in, for example, Japanese Patent Laid-Open No. 8-201729 and Japanese Patent Laid-Open No. 5-207350. Japanese Patent Laid-Open No. 8-201729 discloses an invention of an optical element in which an infrared cut-off filter and an optical low-pass filter are formed on a resin substrate. According to this invention, a single member can realize two functions, reducing costs and the size of the optical element. Japanese Patent Laid-Open No. 5-207350 discloses a camera having an infrared cut-off filter for absorbing infrared light. According to this invention, the infrared cut-off filter is directly placed on a surface of a lens, so that the size of the device can be reduced.

However, the transmittance of a glass with a thin coating changes according to the wavelength of light and an angle of incidence. On the periphery of an image pickup area, an angle of incidence is different from that of the center of the image pickup area and thus the transmission property changes. When a thin multilayer coating is applied to a surface of a spherical lens, it is not easy to keep the same transmission property over the surface of the lens, because the coating at the center of the lens and the coating on the periphery of the lens have different thicknesses. In order to achieve a desired filtering function, a number of processes for obtaining an even thickness are necessary, so that the cost may increase.

Infrared absorbing glass is hard to manufacture. When a lens is made of infrared absorbing glass, a material having a high index of refraction cannot be selected. Since it is difficult to apply infrared absorbing glass to a spherical lens, a high-performance lens cannot be realized with low cost.

Against this background, the present invention provides an image pickup device for obtaining a high quality image, and a portable terminal device using the same.

Disclosure of the Invention

In an aspect of the present invention, an image pickup device, comprises an image pickup optical system comprising an optical filter for limiting transmission of light having a predetermined wavelength; and an image pickup element for performing image pickup by receiving image pickup light from the image pickup optical system, wherein the optical filter is curved such that light incident on a light incident region of the optical filter has a smaller angle of incidence than that in the case where the optical filter is flat.

In another aspect of the invention, the optical filter is curved such that light is incident, over the light incident region, substantially perpendicularly to the optical filter.

In another aspect of the invention, a substrate composing the optical filter has flexibility.

In another aspect of the invention, the optical filter is curved symmetrically with respect to an optical axis of the image pickup optical system.

In another aspect of the invention, the optical filter limits transmission of light other than visible light.

In another aspect of the invention, the optical filter limits transmission of visible light.

In another aspect of the invention, a portable terminal device comprising the above image pickup device.

As will be described below, other forms are possible in the present invention. The present invention is disclosed to provide some forms of the present invention and it is not intended to limit the claims.

Brief Description of the Drawings

Figure 1 is a view showing the configuration of an image pickup device according to a first embodiment;
Figure 2 is a view showing the spectral characteristics of an optical filter according to the first embodiment;
Figure 3 is a view showing the characteristics of the transmittance of a red component in the image pickup device according to the first embodiment;
Figure 4 is a view showing the characteristics of an angle of incidence of a light beam in the image pickup device according to the first embodiment;
Figure 5 is a view showing the curved shape of the optical filter according to the first embodiment;

Figure 6 is a view showing the configuration of an image pickup device according to a second embodiment;

Figure 7 is a view showing the characteristics of an angle of incidence of a light beam in the image pickup device according to the second embodiment;

Figure 8 is a view showing the characteristics of an angle of incidence of a light beam in an image pickup device according to a third embodiment;

Figure 9 is a view showing the spectral characteristics of an optical filter according to a fourth embodiment;

Figure 10 is a view showing the spectral characteristics of an optical filter according to a fifth embodiment; and

Figure 11 is a view showing the configuration of a portable terminal device according to a sixth embodiment.

Best Mode for Carrying Out the Invention

The following is the details of the present invention. The detailed description and accompanying drawings do not limit the present invention. The scope of the invention is defined by the accompanying claims.

An image pickup device of the present embodiment comprises an image pickup optical system comprising an optical filter for limiting transmission of light having a predetermined wavelength, and an image pickup element for performing image pickup by receiving image pickup light from the image pickup optical system, wherein the optical filter is curved such that light incident on a light incident region of the optical filter has a smaller angle of incidence than in the case where the optical filter is flat.

With this configuration, it is possible to reduce, in the light incident region, a difference in angle of incidence onto the optical filter and reduce a change of the transmission property which is changed by a difference in angle of incidence. It is thus possible to achieve an image pickup device capable of imaging with little loss in image quality. A degree of curving of the optical filter is determined by the transmission property of the optical filter and a permissible reduction in transmittance. For example, in an optical filter having a transmission property that reduces the transmittance of a red component by 5% at an angle of incidence of 12°, when a permissible reduction in transmittance is 5%, the optical filter is curved so as to have an angle of incidence of 12° or less over the light incident region.

The optical filter used in the image pickup device of the present embodiment is curved such that light is incident, over the light incident region, substantially perpendicularly to the optical filter.

With this configuration, it is possible to achieve a substantially uniform transmission property over the light incident region.

In the image pickup device of the present embodiment, a substrate composing the optical filter has flexibility.

With this configuration, even when the optical filter is originally flat, it is easy to provide the optical filter with a desired shape. An angle of incidence onto the optical filter can be easily set small.

In the image pickup device of the present embodiment, the optical filter is curved symmetrically with respect to an optical axis of the image pickup optical system.

With this configuration, the transmission property can be made symmetric and thus a high-quality image can be obtained with little distortion.

In the image pickup device of the present embodiment, the optical filter limits transmission of light other than visible light.

With this configuration, it is possible to limit light having a wavelength within the sensitivity range of the image pickup device other than visible light, thereby achieving an image pickup device having excellent color reproducibility.

In the image pickup device of the present embodiment, the optical filter limits transmission of visible light.

With this configuration, it is possible to achieve an image pickup device having high visibility for light having a wavelength within the sensitivity range of the image pickup device other than visible light.

A portable terminal device of the present embodiment comprises the image pickup device described above.

With this configuration, it is possible to reduce, in the light incident region, a difference in angle of incidence onto the optical filter and reduce a change of the transmission property which is changed by a difference in angle of incidence. It is possible to achieve a portable terminal device comprising an image pickup device capable of imaging with little loss in image quality.

The following will describe embodiments of the present invention with reference to the accompanying drawings.

(First Embodiment)

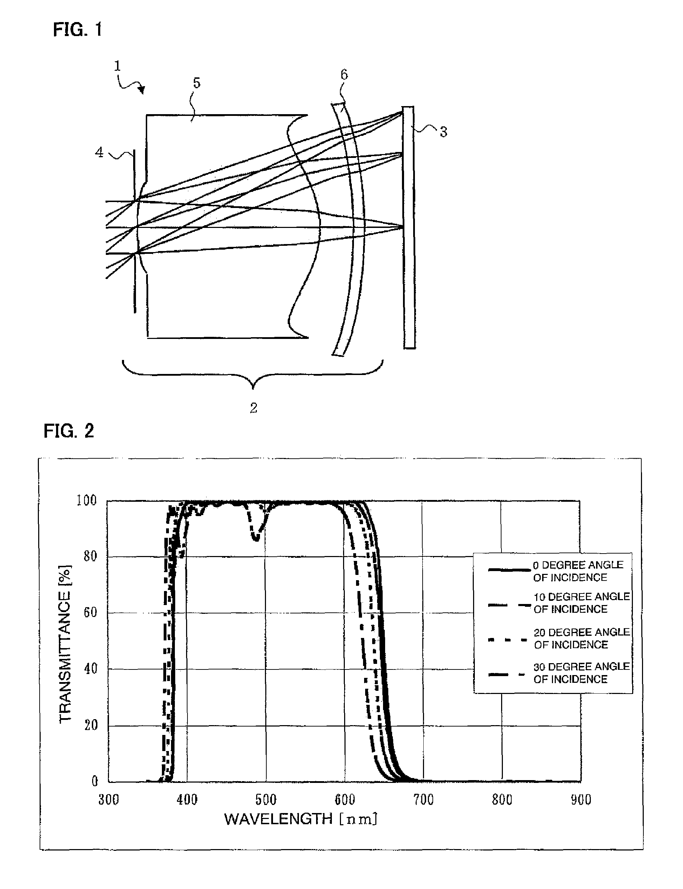

Figure 1 is an explanatory drawing showing an image pickup device 1 according to a first embodiment of the present invention. As shown in Figure 1, the image pickup device 1 has an image pickup optical system 2 and an image pickup element 3. The image pickup optical system 2 has an optical diaphragm 4, a lens 5, and an optical filter 6. The optical diaphragm 4 is a shielding plate that limits the range of transmitted light to improve image-forming performance.

The optical filter 6 is a flexible film whose substrate has a thickness of 0.08 mm to 0.12 mm, and the optical filter 6 has a function of an infrared light cut-off filter. The optical filter 6 can be, for example, a PMMA film. Although the thickness of the optical filter 6 can be optionally selected, a thickness of about 0.2 mm or less is preferable. According to the present embodiment, the optical filter has a resin film which is made of two resin materials with a thickness of about several tens nm and different indexes of refraction, and the optical filter is configured as a band-pass filter for a visible light range. The resin film is configured such that several tens to several hundreds layers of resin materials having low indexes of refraction (e.g., PMMA: n = 1.4) and resin materials having high indexes of refraction (e.g., PEN: n = 1.7) are alternately stacked according to a requirement specification. The substrate of the optical filter 6 is made of a flexible resin and thus the optical filter 6 can be curved to a desired shape. Since the optical filter 6 has flexibility, the possibility of cracks is eliminated. Therefore, it is possible to improve working efficiency in each step without any special care in handling.

Figure 2 is a view showing an example of the spectral characteristics of the optical filter 6. The horizontal axis represents a wavelength and the vertical axis represents a transmittance of a light beam. The optical filter 6 of the present embodiment is configured as a band-pass filter allowing the passage of visible light. Figure 2 shows the spectral characteristics for each angle of incidence. As is understood from Figure 2, as the angle of incidence of a light beam incident on the optical filter 6 increases, a wavelength region having a high transmittance shifts to the short-wavelength side.

When the optical filter 6 is composed of a plate parallel to the image pickup element 3, an angle of incidence onto the optical filter 6 increases in a region having a large image height and on the periphery of a screen. Thus the characteristics of light passing through the optical filter 6 move to the short-wavelength side. Accordingly, the transmittance of a red region decreases and thus a bluish image is obtained in the part having a large image height and on the periphery of the screen, thereby reducing color reproducibility.

In the image pickup device 1, an angle of incidence changes in a range of several to several tens degrees between the center and the periphery of an image pickup area. When the image pickup device 1 is reduced in size and thickness, an angle of incidence onto the optical filter 6 increases on the periphery of the image pickup area, thereby deteriorating color reproducibility.

Even when color reproducibility is optimized at the center of the image pickup area by white balance and the like, color reproducibility cannot be sufficiently corrected on the periphery of the image pickup area for the above reason. Thus an image becomes bluish and a high quality image cannot be obtained.

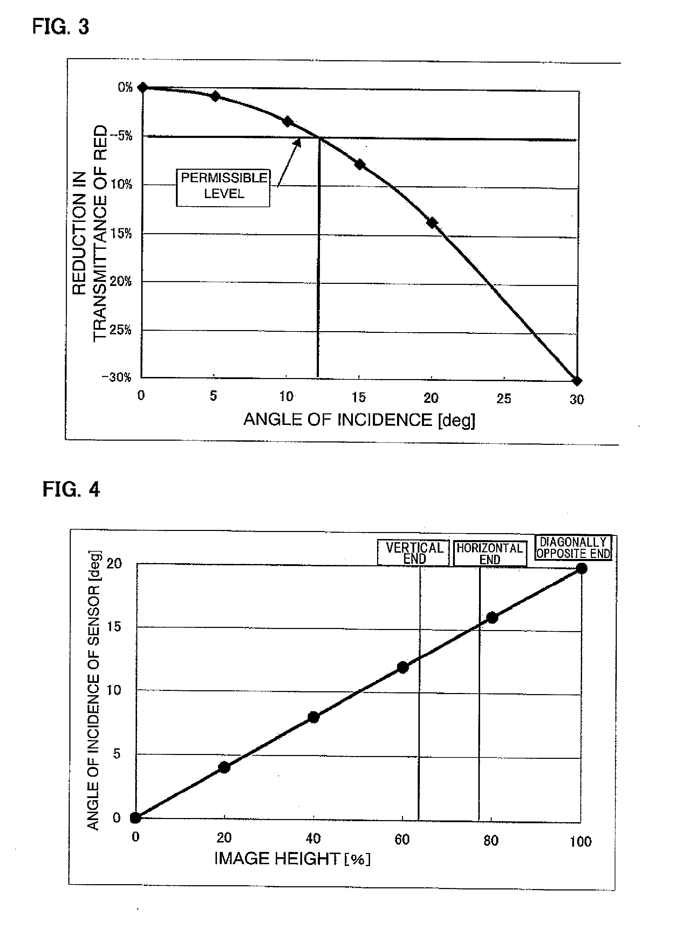

Figure 3 is a graph showing a change in the transmittance of a red component. The transmittance of the red component changes with a change of the spectral characteristics corresponding to an angle of incidence of an incident light beam. Generally, it is understood that when the transmittance of a red component is reduced by more than 5% at the center and the periphery of the image pickup area, an image becomes bluish and color reproducibility deteriorates. In the present embodiment, the optical filter 6 is curved with respect to the lens 5 to reduce a difference in angle of incidence, and an angle of incidence of an image pickup light beam is suppressed to 10 degrees or less over the light incident region, thereby achieving a filtering function which prevents the spectral characteristics from substantially deteriorating color reproducibility.

In the present embodiment, a degree of curving can be optionally changed according to the characteristics of a used optical system (such as a lens). The optical filter 6 is used after being properly curved according to a degree of deterioration of color reproducibility and the characteristics of an angle of incidence.

Figure 4 shows the relationship between an image height and an angle of incidence onto the image pickup element 3. As shown in Figure 4, the maximum angle of incidence onto the image pickup element 3 is 20°.

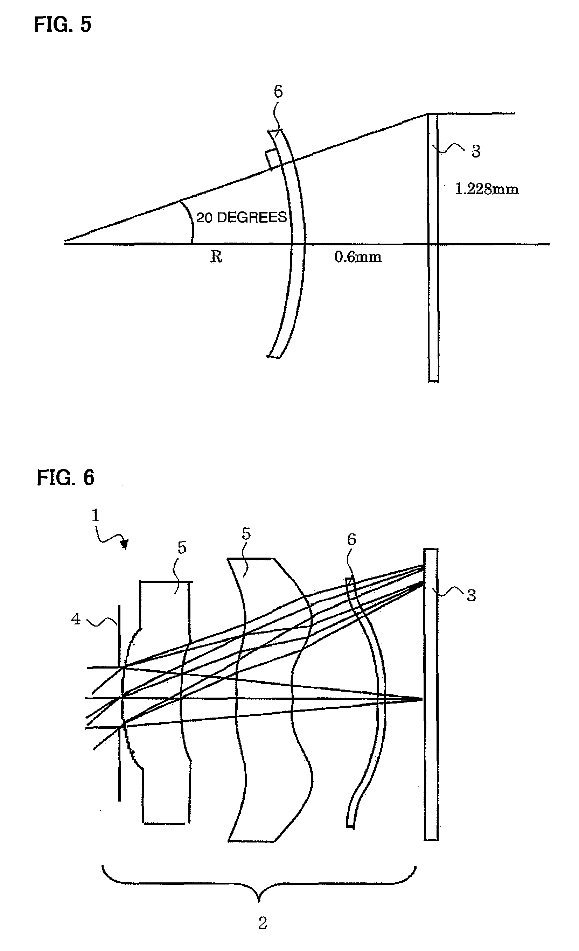

Figure 5 is a schematic view showing an angle of incidence on diagonally opposite ends of the image pickup element 3. In the present embodiment, the image pickup device 1 has a 1/7-inch CIF size (1.900 mm x 1.555 mm). The aspect ratio of the screen is 3:4 and the dimension from the center in a diagonal direction is 1.228 mm. A distance from the optical filter 6 to the image pickup element 3 is 0.6 mm and the radius of curvature of the optical filter 6 is 2.774 mm in the diagonal direction. The angle of incidence on the diagonally opposite ends of the screen is represented by Formula (1) below.

[Formula 1]

$$\tan 20° = 1.228 \text{ mm}/(2.774 \text{ mm} + 0.6 \text{ mm}) \ldots (1)$$

In the present embodiment, since the curved optical filter 6 is used, the principle ray of an image pickup light beam has an angle of incidence of 0 degrees (vertically) on the diagonally opposite ends.

The optical filter 6 can be corrected according to a change in the angle of incidence with respect to the image height of a subject. As in the case of a change on the diagonally opposite ends, the larger the angle of incidence relative to the image height, the transmission property of the optical filter 6 moves to the short-wavelength side. Also regarding the image height, a reduction in color reproducibility is prevented by similarly optimizing the shape of the optical filter 6, as described above.

On a part other than the diagonally opposite ends, a change of the transmission property can be not larger than those of the diagonally opposite ends. On each position, image degradation with respect to an angle of incidence can be properly distributed based on an angle of view and the image height position to determine the transmission property. The shape of the optical filter 6 may be determined so as to reduce the transmittance of the red component by 5% or less.

(Second Embodiment)

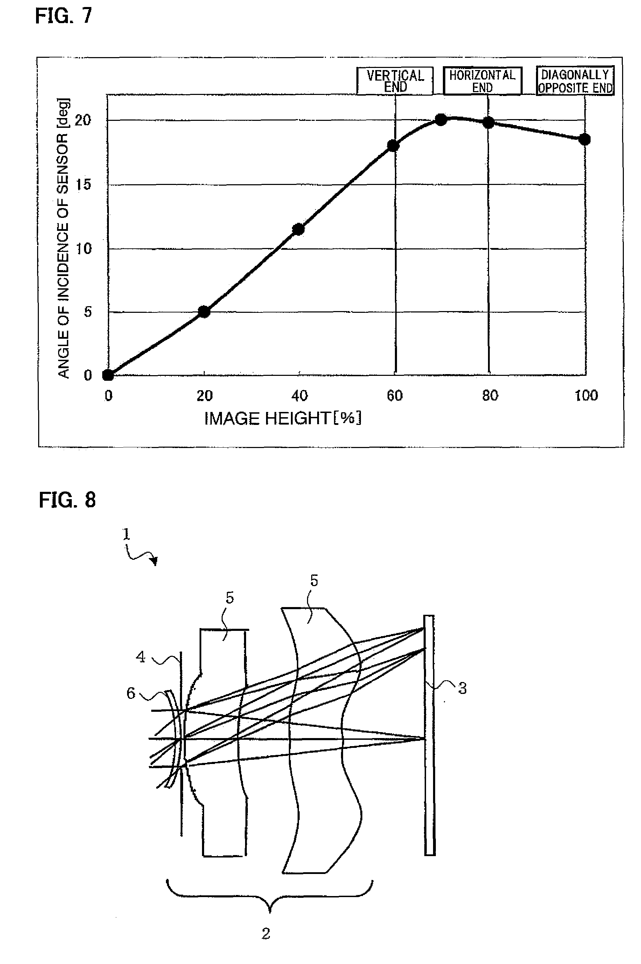

Figure 6 is an explanatory drawing showing an image pickup device 1 according to a second embodiment. Figure 7 is a view showing the relationship between an image height and an angle of incidence onto the image pickup element. In the second embodiment, an image pickup optical system 2 has two lenses 5. Although Figure 6 shows an example of two lenses, three or more lenses may be provided. When a plurality of lenses are provided, an angle of incidence of an image pickup light beam onto an image pickup element 3 does not uniformly increase toward the periphery of the image pickup element 3. For example, the angle of incidence is characterized by reaching the peak at some midpoint and falling on the outmost diagonally opposite ends. In the second embodiment, an angle of incidence onto an optical filter 6 is maximized at about 70% of an image height.

Unlike the evenly curved surface of the first embodiment, the curved surface of the optical filter 6 according to the second embodiment is formed into an aspherical curved surface as shown in Figure 6 such that an angle of incidence is 10 degrees or less on each position in the light incident region of the optical filter 6.

By using the optical filter 6 having this shape, it is possible to suppress a change in the transmittance of a red component between the center and the periphery of an image pickup area as in the first embodiment, thereby achieving an image pickup device 1 having excellent color reproducibility.

Since the substrate of the optical filter 6 has flexibility as in the first embodiment, the optical filter 6 can have an aspherical curved surface. The optical filter 6 may be fixed in a state in which the desired aspherical curved surface of the optical filter 6 is disposed along a surface of another member which is transparent to the wavelength region of used light. The aspherical curved surface may be formed by holding the periphery of the optical filter 6.

(Third Embodiment)

Figure 8 is an explanatory drawing showing the configuration of an image pickup device 1 according to a third embodiment. In the image pickup device 1 of the third embodiment, an optical filter 6 is disposed in front of an optical diaphragm 4. As in the first and second embodiments, the optical filter 6 is formed such that an angle of incidence is 10 degrees or less with respect to all the principle rays from the center to the periphery of an image pickup area.

Generally, in the image pickup device, the optical diaphragm 4 is small in size and the components of the image pickup device on the side of an image pickup element 3 are larger in size. By disposing the optical filter 6 in front of the optical diaphragm 4, the optical filter 6 can be miniaturized. The image pickup device 1 of the present embodiment can be reduced in size by the space of the optical filter 6 disposed between the lens 5 and the image pickup element 3 in the first and second embodiments. Thus the image pickup device 1 can be further reduced in size and thickness.

Also in the case of an image pickup device in which the optical diaphragm 4 is disposed between the lenses 5, the same effect can be obtained by disposing the optical filters 6 in front of and behind the optical diaphragm 4. It is thus possible to achieve an image pickup device having excellent color reproducibility.

(Fourth Embodiment)

The following will describe an image pickup device 1 according to a fourth embodiment of the present invention. The image pickup device 1 of the fourth embodiment has the same configuration as the image pickup device 1 of the first embodiment but the spectral characteristics of an optical filter 6 are different from those of the first embodiment.

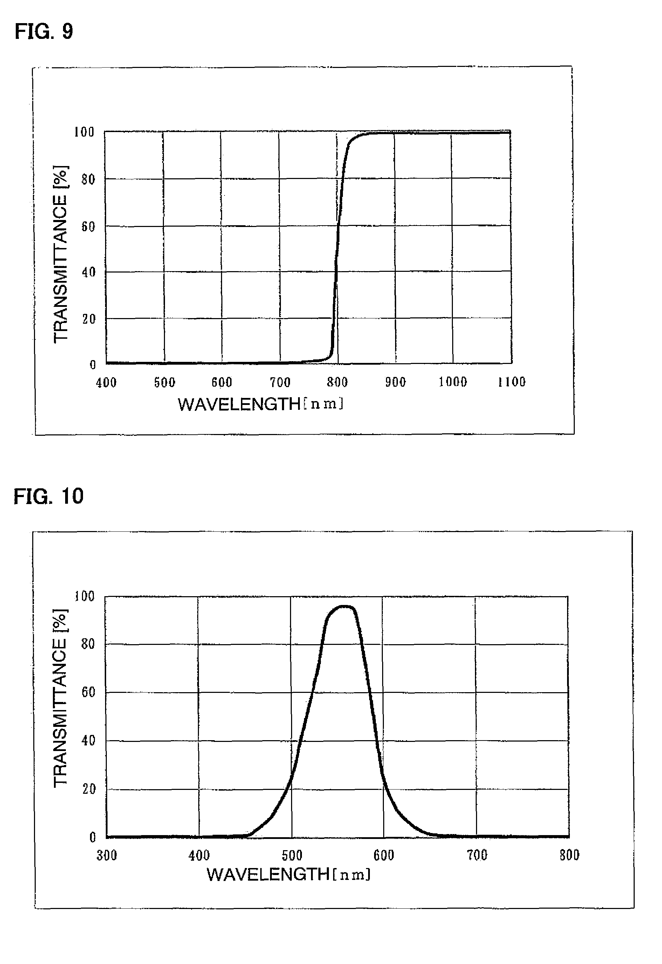

Figure 9 is a view showing the spectral characteristics of the optical element filter according to the fourth embodiment. In the present embodiment, the optical filter 6 is a visible light cut-off filter having spectral characteristics shown in Figure 9.

In the fourth embodiment, since the visible light cut-off filter is used, it is possible to achieve the image pickup device 1 which has stable light receiving sensitivity and causes few ghosts. As in the foregoing embodiments, since the curved optical filter 6 is disposed, it is possible to reduce a change of the transmission property and achieve an excellent filtering function, the transmission property being changed by an angle of incidence of an image pickup light beam.

(Fifth Embodiment)

The following will describe an image pickup device 1 according to a fifth embodiment of the present invention. The image pickup device 1 of the fifth embodiment has the same configuration as the image pickup device 1 of the first embodiment but the spectral characteristics of an optical filter 6 are different from those of the first embodiment.

Figure 10 is a view showing the spectral characteristics of the optical element filter according to the fifth embodiment. In the fifth embodiment, a band-pass filter or an optical low-pass filter is used which has spectral characteristics shown in Figure 10.

In the fifth embodiment, a band-pass filter is used. It is thus possible to achieve an image pickup device sensitive only to a specific wavelength. For example, by installing the band-pass filter in a surveillance camera for detecting only infrared light, a recognition camera such as an iris recognition camera, a vehicle-mounted infrared camera used for driving at night, and so on, it is possible to obtain stable light receiving sensitivity. Further, it is possible to achieve an infrared image pickup device sensitive only to a specific wavelength range. In these image pickup devices, visibility can be higher at night, in fog, and so on than in ordinary visible light.

When an optical low-pass filter is used, it is also possible to achieve an image pickup device 1 enabling high image quality with few moires and few false colors.

(Sixth Embodiment)

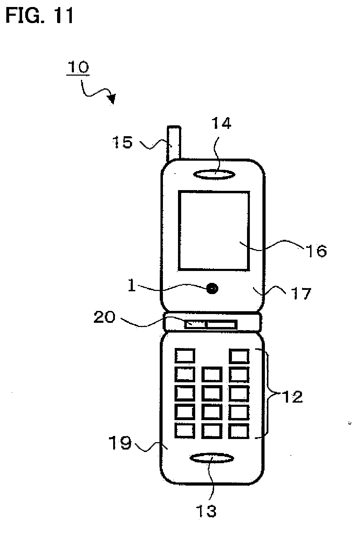

Figure 11 is a view showing the appearance of a cellular phone according to a sixth embodiment of the present invention. The cellular phone of the present embodiment has the image pickup device 1 of Embodiment 5 and can particularly improve visibility.

The configuration of a cellular phone 10 will be described below. As shown in Figure 11, the cellular phone 10 has a key part 12 for various user inputs, a microphone 13 used for voice communications, a speaker 14, an antenna 15 for transmitting and receiving radio waves, and a display part 16 for displaying a message to a user and an image photographed by an image pickup device 1.

The cellular phone 10 is configured such that an upper body 17 and a lower body 19 can be folded by a hinge 20. The image pickup device 1 is mounted on the upper body 17 and is oriented to a user in the present embodiment. In the present embodiment, security is improved by authenticating the registration of the user and deciding whether or not the user can use the cellular phone. By using the optical filter of the present embodiment, visibility can be improved and authentication can be performed in a short time. Thus even in the case of complicated security processing, it is possible to make the cellular phone easy to use without reducing convenience. Figure 11 shows an example of the cellular phone 10 in which the upper body 17 and the lower body 19 can be folded via the hinge 20 and the image pickup device 1 is mounted on the upper body 17. The portable terminal device of the present invention is not limited to this configuration and is applicable to portable information appliances of various forms. For example, the portable terminal device of the present invention is applicable to portable information appliances and the like including a PDA (personal digital assistant), a personal computer, and external devices of a personal computer.

In recent years, cameras are frequently used for vehicles and the present invention is also applicable to such onboard cameras. Additionally, the present invention is also applicable for miniaturization of appliances such as a DSC, a camcorder, and so on in which color reproducibility is important, and appliances such as a surveillance camera in which improvement of visibility is important.

Although the above explanation specifically described the image pickup device of the present invention with reference to the foregoing embodiments, the present invention is not limited to these embodiments.

The foregoing embodiments described, as the optical filter 6, an example of a resin film in which two resin materials are stacked. The configuration for cutting infrared light can be also obtained by, for example, doping divalent copper ions with resin.

Preferred embodiments of the present invention at present were described in the above explanation and it is understood that these embodiments can be modified in various ways. It is intended that all the modifications within the true spirit and scope of the present invention are included in the accompanying claims.

Industrial Applicability

The present invention has an excellent effect of preventing image quality degradation and miniaturizing a device, and is useful as an image pickup device such as a camera module and a portable terminal and the like having the image pickup device.

**Claims**

1.  An image pickup device, comprising:

    an image pickup optical system comprising an optical filter for limiting transmission of light having a predetermined wavelength; and
    an image pickup element for performing image pickup by receiving image pickup light from the image pickup optical system,

    wherein the optical filter is curved such that light incident on a light incident region of the optical filter has a smaller angle of incidence than that in the case where the optical filter is flat.

2.  The optical pickup device according to claim 1, wherein the optical filter is curved such that light is incident, over the light incident region, substantially perpendicularly to the optical filter.

3.  The optical pickup device according to claim 1, wherein a substrate composing the optical filter has flexibility.

4.  The optical pickup device according to claim 1, wherein the optical filter is curved symmetrically with respect to an optical axis of the image pickup optical system.

5.  The image pickup device according to any one of claims 1 to 4, wherein the optical filter limits transmission of light other than visible light.

6.  The image pickup device according to any one of claims 1 to 4, wherein the optical filter limits transmission of visible light.

7.  A portable terminal device comprising the image pickup device according to any one of claims 1 to 6.

FIG. 1

FIG. 2

## FIG. 3

## FIG. 4

## FIG. 5

6

3

1.228mm

20 DEGREES

R          0.6mm

## FIG. 6

1

5

5

6

4

3

2

# FIG. 7

# FIG. 8

FIG. 9

FIG. 10

FIG. 11

## INTERNATIONAL SEARCH REPORT

| International application No. |
| --- |
| PCT/JP2006/304244 |

A. CLASSIFICATION OF SUBJECT MATTER
*H04N5/225*(2006.01), *G02B5/22*(2006.01), *H04M1/00*(2006.01), *H04M1/21* (2006.01)

According to International Patent Classification (IPC) or to both national classification and IPC

B. FIELDS SEARCHED

Minimum documentation searched (classification system followed by classification symbols)
*H04N5/225*(2006.01)

Documentation searched other than minimum documentation to the extent that such documents are included in the fields searched

| | | | | |
| --- | --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2005-27155 A (Matsushita Electric Industrial Co., Ltd.), 27 January, 2005 (27.01.05), Full text; Figs. 1 to 4 (Family: none) | 1-7 |
| P,X P,A | JP 2005-101911 A (Konika Minoruta Oputo Kabushiki Kaisha), 14 April, 2005 (14.04.05), Full text; Figs. 1 to 11 & US 2005/0068456 A1 | 1,2,4,5,7 3,6 |
| P,X P,A | JP 2005-250227 A (Sony Corp.), 15 September, 2005 (15.09.05), Par. Nos. [0029] to [0031]; Fig. 2 (Family: none) | 1,2,4,5,7 3,6 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 May, 2006 (25.05.06) | Date of mailing of the international search report<br>06 June, 2006 (06.06.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8201729 A

- JP 5207350 A